# EUROPEAN PATENT APPLICATION

(11) **EP 2 762 348 A2**
(43) Date of publication of application: **06.08.2014**
(21) Application number: 13186195.7
(22) Date of filing: 26.09.2013
(51) Int. Cl.: B60L 8/00

(54) **A safe, aerodynamic and ecologically benign enclosed vehicle**

(30) Priority: 31.01.2013 US 201313815107
(71) Applicant: Freeman, Benjamin, Newton Square, PA 19073 (US)
(72) Inventor: Freeman, Benjamin, Newton Square, PA 19073 (US)
(74) Representative: Meyer-Dulheuer, Karl-Hermann

(57) **Abstract**

This device is a vehicle which normally has more rows of seats than a typical car, van or truck. However, it is so thin that it only has room for one person per row. Because such a vehicle is about half as wide as other vehicles, it reduces wind drag by almost half. For an ultra-thin enclosed vehicle of this type to maintain stability during turns, the two front wheels must be spaced so widely apart that they will be beyond the perimeter of the occupant and cargo compartment. In addition to these advantages for a car with an internal combustion engine or an electric motor, such an ultra-thin vehicle makes it possible to easily support an expandable solar array which extends to the width of a typical parking space when it is parked but generally contracts to being almost as thin as the width of the vehicle when it is being driven.

## Description

One problem the present invention was created to solve is the key aerodynamic problem built into the design of virtually all cars, trucks and buses on the road today. When the car was invented, no one contemplated driving eighty miles per hour. And even if someone did, the fact that airplanes weren't yet invented means that no one really understood how the aerodynamic profile of a vehicle becomes increasingly important as its speed goes up. Additionally, the cost of fuel wasn't nearly as significant as it is today. Therefore, people used the design of horse drawn vehicles as the basis for designing the physical parameters of a car. Even in retrospect, it was true that creating cars wide enough to seat two or three people per row made sense when cars drove so slowly that their aerodynamic profile made little difference. But today, the high speed of cars means that the improved aerodynamic profile associated with a much thinner car creates significant fuel savings. Major fuel savings translate into a more ecologically benign vehicle no matter what fuel one uses. As will be shown in the following sections, there are a variety of reasons that the difference between an ultra-thin car and one of normal width can literally be the difference between economic viability and an impractical design in regard to a solar car. When one combines the inherent ecological advantage of an ultra-thin car of any type with the specific advantage of using an ultra-thin design to make a solar car viable, it is clear why the world's coming ecological, oil depletion and global warming crises create a crying need for the type of ultra-thin car which is the starting point of all embodiments of the present invention.

In the context of the pre-existing road and parking system which exists, an ultrathin enclosed vehicle makes it possible to create crumple zones on one or both sides of the vehicle without making it so wide that it cannot be driven on typical roads or parked in typical parking spaces. This is a significant safety advantage associated with an ultra-thin vehicle. If one only had two rows of seats, then an ultra-thin car would only allow two people to travel together. But parking spaces and what people are acclimated to dealing with on the roads have made it appropriate and safe for passenger vehicles as long as twenty feet to be accepted. Therefore, it would be reasonable to build ultra-thin vehicles long enough for four, or in some cases even five, rows of seats. In the context of a solar car, a longer ultra-thin vehicle makes it possible to easily support an expandable solar array able to power the vehicle for more miles than people normally travel. While a long ultra-thin gas driven car could accommodate ninety-eight to ninetynine percent of the trips taken, even a solar car designed as discussed here could be used for more than ninety-five percent of trips that people normally take.

However, one does have to more seriously consider stability issues when making a car so thin that only one person can fit per row. Even if one uses four wheels, the short axle created if one limits the axle length to the width of the vehicle could create stability problems - especially when making turns at high speeds. But the key to stability around turns is the length of the front axle. In fact, saving weight, money and fuel while also considering aerodynamic and safety issues suggests that a total rethinking of the most appropriate redesign of the basic frame of an enclosed vehicle would use only one wheel in the rear and two widely spaced wheels in the front.

The present invention is an attempt to basically redesign the car in a way which will save fuel and money while increasing safety without making it impossible to accommodate the number of passengers that are normally driving together. But because the primary, most logical and most ecologically benign first use of this design is a solar car, all but the last two drawings, one of the two sets of independent claims and most of the remaining words of the specifications will relate to a solar car based on this ultra-thin design. However, the basic idea of an ultra-thin design which includes the other features mentioned so far and built upon in the remainder of this patent application also applies to any enclosed vehicle that uses an internal combustion engine or another propulsion method including an electric vehicle without any solar assist.

In the following, the relevant prior art shall be examined. No patent applications could be found which include more than one of the key elements of the type of enclosed vehicle according to the present invention. The closest thing which exists is a three wheeled motorcycle with one wheel in the rear and two in the front. But even this vehicle lacks the safety features incorporated into the presented vehicle. Further, it misses the point of providing the main means of transportation for a family when they seat one, or at most two, persons. Finally, it is not an enclosed vehicle which is important for aerodynamic, weather-related, aesthetic, safety and security reasons.

There are many patents, patent applications and actual uses of electric vehicles with solar cells providing some of the energy needed for the vehicle to operate. Most of them involve putting solar panels on the roof, hood or other normally existing parts of a vehicle designed to look like typical vehicles on the road today. An example of this would be patent US 8 120 308 A1 due to Ward. While this patent has a variety of useful and interesting ideas, it specifically talks about solar panels "being mounted on the vehicle, or provided inside the vehicle beneath a mirror. Examples of surface where a solar panel can be provided include a roof, trunk, moon roof and a pick up truck bed cover. Other modular panels include solar panels provided on sunshades, roof rail attachments or roof top clamps on carriers." Like most other uses, patents and patent applications, it is clear that his invention only contemplates using a solar array of a fixed size and fixed location with its solar panels mounted on the available vehicle surface area. But as will be described further in the next section that focuses on solar vehicles, the limited area available on a vehicle makes a solar array limited in size to the roof, hood and other nearby areas too small to supply nearly enough electricity to provide most or all of the power required by a typical driver. It is well known, for instance, that Toyota has experimented with putting solar panels on some of its vehicles with electric motors. But its engineers have found that the extra range created does not justify the complexity and problems associated with adding a solar component to an electric or hybrid vehicle. Hence, the only solar vehicle they regularly sell is one with a small panel mounted on part of the roof; and the only purpose of this solar panel is to help with heating and cooling of the vehicle.

There is a second group of vehicles and patent applications which have solar arrays that clearly extend beyond the perimeter of the area that would normally be included in a vehicle. In addition to the solar cars that race in the desert, patent application US 2010/0193261 A1 due to Freeman includes the idea of a solar array which always extends far beyond the perimeter of the vehicle. Not only is a stationary array radically different from what is proposed in the present invention, but such vehicles have a variety of disadvantages as generally discussed in the next section of this application.

On the other hand, there are only a handful of patents and actual uses of vehicles where the array covers a smaller footprint when it is undeployed and the vehicle is being driven as compared to the array covering a much larger area when it is deployed. Other patents and applications featuring a variable sized, or expandable, solar array are significantly different from this one in terms of how the solar panels move and how they are protected.

For instance, Glynn application US 2012/0073885 A1 also makes a general claim that solar panels should "move from a first position to a second position and from said second position to said first position." But if one examines his claims, specifications and drawings, it is obvious that he is only talking about solar panels which are always in a position facing upwards towards the sun. Like the patent application US 2008/0100258 A1 due to ward, Glynn's main thrust are solar panels that slide from one position to another one. While there are a variety of patents, uses and patent applications on moving solar arrays (including patent application US 2009/0288890 A1 due to Freeman which envisions a solar array that is larger than the vehicle when undeployed but also gets repositioned), none of these involve the same type of positioning and movement proposed in this patent application.

There are also many patents and patent applications on solar carts, such as US 2011/0146751 A1 due to McGuire, US 4 452 234 A due to Withjack, US 5 379 596 A due to Grayson, US 2004/0094193 A1 due to Geyer, and US 2008/0053510 A1 due to Lin. US 7 888 590 B2 due to Niederer includes the idea of a top solar panel with other solar panels hanging down vertically on hinges which could be raised to the same level as the topmost solar panel. But since the purpose of these inventions is to create a solar cart, none of them even consider the secondary issues are crucial as will be discussed during much of the remainder of this patent application.

The most important issue where vehicles are fundamentally different from carts is the necessity to cover the solar panels which hang down. While a slow moving cart which is only used in a clean factory could allow solar panels to hang down to within a foot of the ground without worrying about damage to the solar panels, there are a variety of problems this would create for a vehicle moving at high speeds on the roads of the world. Since these problems are mentioned in other parts of this application, the three key problems this creates will not be relisted here. A vehicle which incorporates the present invention's idea of covering solar panels which hang down to within a foot of the ground in the undeployed position is not state of the art and introduced by the present invention.

Furthermore, covering the panels to protect them when they are hanging down is only one issue which arises from the key idea of having side solar panels as disclosed in the present invention. An equally important set of problems involves accessing the area behind the side solar panels when needed and preventing thieves or weather from accessing the same area when the solar array is deployed. No other application, patent or actual use even indirectly suggests that there is a problem to be considered here, let alone suggests an answer.

It is also important to tilt the array towards the sun, especially in the early morning and just before the sun goes down. Proper positioning of a solar array which is close to horizontal at noon can make as much as a forty percent difference in electricity generation during the early morning and late afternoon hours. Many people have used formal two axis trackers or other complex systems to properly orient stationary solar arrays. But placing a two axis tracker or any of the other complex solar orientation devices used for stationary arrays on a moving vehicle is problematical. Instead, we can use the ability of the driver to pre-position a moving vehicle in the best possible direction when parking to simplify the system which one uses to orient the solar array of a moving vehicle. As will be seen, the present invention creates the effect of a two axis tracker by combining the drivers' ability to drive the vehicle to a good position with the use of internal jacks to fine-tune the positioning of the solar array towards the sun for maximal electricity generation. Of course, the complex calculations required to do this properly while also deploying and retracting a solar array also requires the use of an on-board computer. The presented deployable solar array could be oriented, retracted and deployed by a scientist, an engineer or by someone who spent significant time learning how to do it and acclimating themselves to using the system if there were no on-board computer involved. But a regular driver needing to leave the vehicle quickly because they were late for an appointment when they parked it would have serious problems with this system unless a properly programmed on-board computer took the lead. There is no prior art that uses an on-board computer to help the driver accomplish the complex computational oriented tasks required to orient a deployable solar array on a vehicle.

Hence, it can be seen that the present invention incorporates many unique elements.

Partly because solar is the most ecologically benign vehicle and partly because there are advantages specific to solar for the type of ultra-thin vehicle contemplated in the present invention, the focus of this patent application is how to combine the basic safe ultra-thin design with a solar array to create a viable solar car. In fact, no one has yet sold a solar car, truck or van commercially. This is likely because contradictory objectives must also be met to make a solar car as attractive to potential buyers as another type of vehicle:
A. The total amount of electricity created by the solar array must be enough that it can provide most of the energy which an average driver uses. In general, this requires a solar array with a much larger average footprint than the footprint of the vehicle the solar panels are mounted on. However, the dimensions of the deployed solar array must not be so large that it extends noticeably beyond the area which is normally allotted for a typically sized parking space.
B. The solar array must not cause the vehicle to become unstable, to do a wheelie, to tip over or to take off like an airplane This requires that the area of the solar cells that extend beyond the perimeter of the vehicle be minimized when the vehicle is being driven.
C. The vehicle must be as intrinsically safe as a standard car, truck, bus or van of a similar type. This includes such factors as minimizing glare, making it possible for an average driver to turn the vehicle easily and not allowing solar panels to interfere with the driver's ability to see danger.
D. The solar array must not make it difficult for the driver and passengers to enter or leave the vehicle and it must not make it easy for solar cells to be vandalized or hit by stray road debris. The solar array must also not be positioned in such a way that passersby or others could easily get hurt or damage it by running into a solar panel. Additionally, the solar array must not make passengers feel claustrophobic by not allowing them to see out of the vehicle.
E. Over the lifetime of a typical car, truck, bus or van, the cost of the solar array and any mechanisms needed to support it must not be so expensive that they are greater than the fuel savings created by switching to solar electricity from gasoline. Furthermore, the systems used must be reliable.
F. The solar array must be high enough when it is producing electricity that it will not be shaded by people, nearby vehicles and other objects of similar or lesser heights. It also must be designed in such a way that one part of the solar array does not shade another part.
G. The solar array must not interfere with the vehicle's ability to perform as a standard car, minivan or similar vehicle in terms of parking, handling passenger comfort, safety, repairperson access and other practical issues.
H. The car must have at least as much cargo space as a small car, and be able to transport enough people and have the range to complete at least 80% of trips which drivers typically make without using plug in recharging.

The key to understanding how to achieve the somewhat contradictory objectives A through H listed above is to have an array whose constituent parts (i.e., solar panels) do not extend significantly beyond the vehicles perimeter when it is being driven - but these solar panels can be repositioned when the vehicle is parked so that the total footprint of the solar array covers an area much larger than the vehicle. Since people typically park a vehicle far more than they drive it, an expandable solar array could provide the energy needed to fulfill an average driver's needs at least 80% of the time. As will be seen in the detailed descriptions of the prime type of embodiments of the present invention, it is also the best way to protect some of the overhanging solar panels when the vehicle is being driven and to prevent theft when the array is expanded involves the use of a movable side wall which acts as a skin for a significant part of the sides of the vehicle. The fact that this outer skin will look like the side of a regular non-solar van or SUV will also make the vehicle look less weird than it would otherwise. Another reason to have a set of doors which cover the side solar panels that hang down in the undeployed position is that it can be returned to position to protect the vehicle from theft or weather during the time when the solar panels which sit behind it when the vehicle is being driven are in their deployed position high up in the sky.

In the present invention, the word "undeployed" is used to describe the solar array when its individual solar panels are in the positions they take when the vehicle is being driven. When the vehicle is parked, however, the solar array can be expanded to cover an area approximately equal to the size of a standard parking space. This repositioned solar array which covers a footprint larger than the vehicle is called "deployed" in the present invention.

The entire area from the front perimeter to the rear perimeter of the vehicle which generally has sides and which includes where the driver and passengers sit and where the cargo and main mechanical parts and battery sit will be called the "occupant and cargo compartment."

To prevent tipping, all embodiments of the present invention including non-solar ones will have two front wheels spaced far enough apart that the distance between them is at least one hundred and forty percent as wide as the passenger and cargo compartment. Since the front is where turns are made, this three wheel arrangement is far less prone to tipping than one where two of the three wheels are in the rear.

In the present invention, there are solar panels which always face upwards to the sun covering at least 80% of the entire occupant and cargo compartment. While the rear part of the solar covered area will be about the same width as the occupant and cargo compartment, the front part of this solar covered area is wider than the occupant and cargo compartment. The front solar part is generally slightly less wide than the length of the axle between the front wheels which lie beneath it. All or some of these solar panels may be able to tilt slightly and, even if they are mounted in a stationary position, the front part of the solar area which extends beyond the sides the passenger and cargo compartment should typically be tilted with its front perimeter lower than its rear perimeter. Although some or all of these always upward facing solar panels may tilt slightly as just mentioned, the aforementioned solar area shall be called the "stationary solar array." When the vehicle is being driven and the solar array is undeployed, there is another solar panel or group of solar panels which are underneath most of the part of the stationary array that extends beyond the sides of the vehicle near its front. When the car is parked and the array is fully deployed, this solar panel or panels are repositioned to being in front of the stationary solar array. For definitional purposes, the present invention will call the panel or panels the "movable front solar panels."

Although a solar vehicle along these lines could be built for two or four people, the prime embodiment of the vehicle is built to accommodate three people. The driver seat is about as close to the front perimeter of the vehicle as it typical for most vehicles. There will also be a second seat behind the driver in the same general place as the second row of seats are in most cars. The third seat is in the very rear of the vehicle. Normally, this seat faces backwards so that the person in this seat, called the "rumble seat," looks in the opposite direction from the driver and the passenger in the second seat. However, this seat can swivel so that it looks forwards into the cargo area. Not only is there a place to store cargo in the middle area between the second seat and the rumble seat, but below this storage space are the motor, batteries, electrical controllers and various other mechanisms required for the working of the vehicle.

Over the rumble seat is another solar panel which, in its undeployed position, is partly over the rear part of the stationary solar panel and partly behind it. When the array is deployed, this "rear solar panel" (which can consist or more than one solar panel) swivels ninety degrees so that its longest side is perpendicular to the normal direction of travel of the vehicle. Every solar panel mentioned so far is either on the same plane or within twenty five degrees of the same plane.

When the vehicle is being driven and the array is undeployed, there are also "side solar panels" on both sides of the vehicle. In the undeployed position, they hang down at a ninety degree angle from the rear part of the stationary solar array. They generally cover the area where the cargo, batteries and mechanical parts of the vehicle are located. They might also cover a small part of the area where the second seat and the rumble seat are located. When the array is deployed, actuators or some other means are used to reposition these side solar panels to the same level or plane as the solar panels on the roof right next to them. In other words, in the fully deployed position, these side solar panels are on the same plane, but about six feet above, the same general position as the ground which the vehicle is parked on.

However, there are intermediate levels of deployment of the side solar panels: Assume that each set of side solar panels includes two solar panels. In other words, there will be one solar panel on each side of the vehicle right next to the rear area of stationary solar array. These two solar panels shall be called the "inner side solar panels." Then next to each of these inner side solar panels there are a set of two "outer side solar panels." Just as there is one "inner side solar panel" on each side of the vehicle, there is one "outer side solar panel" on each side of the vehicle. The reason that this distinction between the inner and outer side solar panel(s) is important is that it is possible to raise the two inner side solar panels to the same plane as the stationary rear solar panel while still leaving the two outer side solar panels hanging down vertically. Or one could raise all of the side solar panels to the same plane.

In the most logical electrical embodiment of the vehicle, the solar panels that are always exposed to the sun even while the vehicle is being driven are wired together in a first series and the two inner side solar panels, any solar panel near the rear of stationary solar array which is shaded while the vehicle is being driven and the movable front solar panels are wired in a second series. If one assumes that each of these solar panels is a twenty four volt nominal solar panel, this would mean that each series produces enough voltage to run a motor which runs on at least ninety six volts. In practice, this means that the first series just mentioned continues feeding the batteries at all times and the other series supplements the power given by the first series only when they are deployed.

This paragraph explains what happens to the electricity generated by the outer side solar panels; at least in terms of the prime embodiment. In addition to the main set of batteries to power the vehicles motor, there are two other batteries which control the auxiliary systems of the vehicle including the various actuators, the heating and the cooling systems. Each of the two outer side solar panels are wired to produce electricity for one of these two auxiliary sets of batteries. To create more power for these auxiliary batteries, the vehicle can be built to allow the passengers to pedal to run generators which supply extra electricity for the two auxiliary batteries.

To protect the side solar panels from being damaged by road debris kicked up as the vehicle is being driven, there is a "non-solar wall" which covers at least half of the side solar panels. While this non-solar wall can be configured or open and shut in various ways, the prime embodiment contemplates the use of doors, generally made of hard plastic, which swing out as per standard house doors. Normally, there are two doors per side of the vehicle with one of these two doors hinged to the vehicle just in front of the side solar panels and the other of these two doors hinged to the vehicle just behind the rear of the side solar panels. So that the solar panels can be raised, these doors would swing outward on their hinges just before the side solar panels are raised. Similarly, these side solar doors can swing back to covering the side solar panels just after they have been returned to their undeployed position. After the solar panels are raised and while the vehicle is parked, these doors can be closed again so that the vehicle is protected from theft or rain leaking in. But they would have to be swung out again just before the side solar panels are returned to their undeployed position and then closed again after the side solar panels have actually returned to their undeployed position. If a repairman wants to work on the vehicle or if the owner or passengers want to store or retrieve cargo in the area above the batteries and motor, then the doors can be left open while the side solar panels are raised for easy access.

Since the passenger and cargo compartment is so thin, the prime embodiment also includes one or more "side safety bars" which might be about a foot from each of the two sides of the passenger and cargo compartment. If another car hits one of these side safety bars, much of the collision impact will be absorbed. If the struts which connect any of these side safety bars to the passenger and cargo compartment or to the covering over the front wheels are made carefully, they can guarantee that even more of the energy generated by a collision impact is absorbed before the impacting vehicle actually hits the passenger and cargo compartment. In effect, the one foot area between the "side safety bars" and the passenger and cargo compartment" perimeter is a crumple zone comparable to the crumple zone incorporated into vehicle design for the area between the front bumper and where the driver and passengers sit. Since the only way to have room for a crumple zone is to create a vehicle so thin that it is far thinner than a typical driving lane or parking space, this extra safety feature is only possible because of the ultra-thin nature of the vehicle. Furthermore, this side safety bar can also be the base to which the outer perimeter of the wide front part of the stationary solar array or the movable front solar panels are affixed. Alternatively or additionally, a housing over the extra wide front axle can be used for the same purpose.

Although the prime embodiment of the vehicle only has three wheels, the fact that the front two are very widely spaced apart means that this vehicle is very stable. It is to offset any potentially destabilizing lift created by the wide width of the front solar panel or panels that it makes sense for the wider front part of the stationary solar array and the solar panel or panels underneath it be angled so that their front perimeter is lower than their rear perimeter.

The present invention fulfills objectives A - H far better than anything cited in the prior art. The ultra-thin nature of the basic design of the present invention makes it comparatively easy to add an inexpensive and viable version of an expandable solar array to it. Nonetheless, there are some advantages of this design for a non-solar car - even as compared to a solar car using this basic body framework.

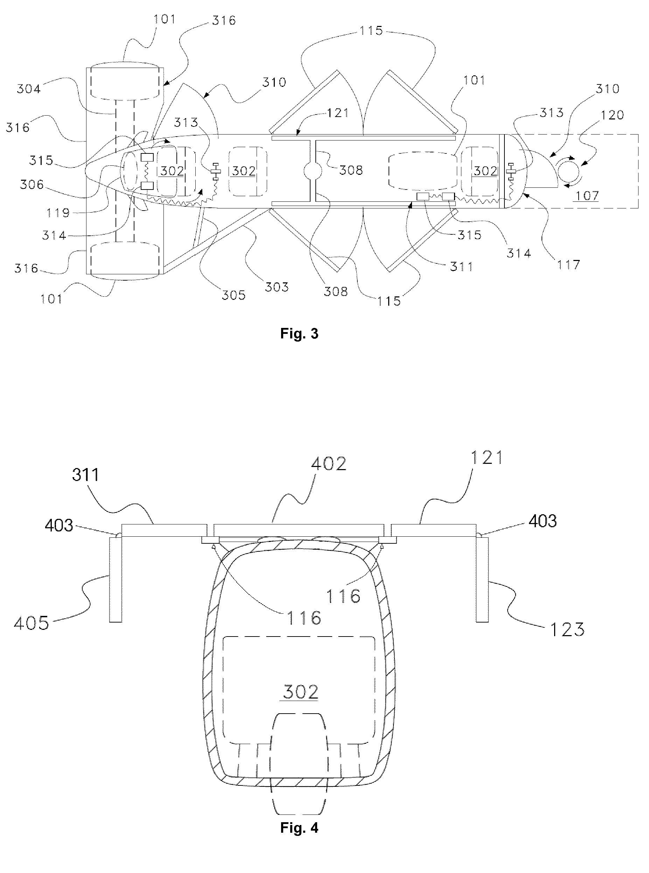

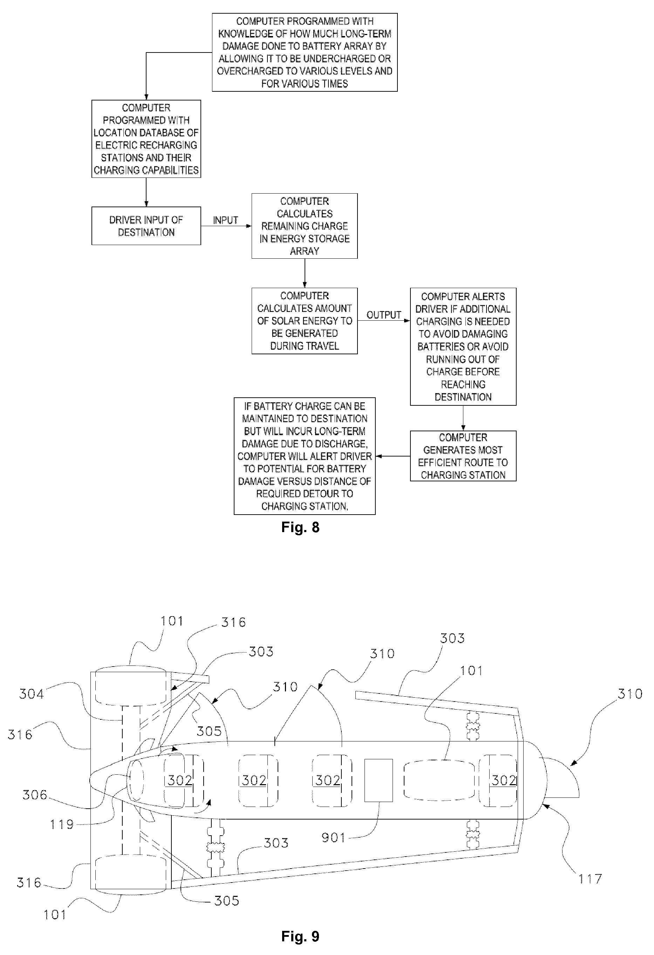

The most important example of this is that side solar panels make it impossible to have seats in the area where these side solar panels are located without giving the occupants claustrophobia. Their claustrophobia would be due to the fact that one can't have windows in an area where the side solar panels are positioned while the vehicle is being driven. This is the reason that the top drawing (Fig. 3) for a solar version of this vehicle shows three seats while the top drawing (Fig. 9) for a non-solar version shows four seats. The fact that there have been vans sold for personal use with five rows of seats suggests that one could even make a non-solar version of the present invention with five seats.

The rising price of gas has caused many corporate research and development departments and independent inventors and tinkerers to work on a solar car without any of them addressing even half of the objectives or problems outlined above. Even more importantly, every car manufacturer and many of those who wish to sell to them have used considerable resources trying to find the most aerodynamic and safe design for a car, truck or van. The fact that no one else has come up with anything like the present invention proves that it is not obvious that this could be done.

Important terminology concerning the present invention shall now be introduced. A "solar panel" refers to a group of solar cells that are held together by one substrate and within one framework. It is also true that there is an internal wiring among the solar cells in a particular solar panel which means that shading as little as eight percent (or, at most half) of the solar panel has the effect of causing it to be unable to produce any significant amounts of usable electricity.

It is with this electrical wiring in mind that the main reason can be seen why one would use two different solar panels to cover one group of solar cells which move together from the undeployed to the deployed position. The reason that the detailed description only divides one group of solar panels that move together into two specific solar panels (402, 403) is that the rear one (403) is covered by a solar panel (107) in the undeployed position. If the area covered by two solar panels (402, 403) were wired as one (in which case they would be numbered only 402 in the drawings), then this entire area of solar cells would produce no electricity in the undeployed position-despite the fact that the front half of the area is not shaded. Only by dividing this area into two solar panels (402, 403) can the front half (402) be allowed to produce electricity even while the back half is shaded. In every other case, the detailed description uses a singular term "solar panel" as identical to the terms "sets of solar panels" because this embodiment only uses one solar panel to move from one undeployed position to another deployed position. Since the detailed description is pointing only to one specific embodiment, there is no reason to call one solar panel a "set" of solar panels when it is already known that this set only consists of one solar panel. But because the claims are talking about any embodiment of the present invention rather than just the one embodiment illustrated by the drawings, the claims generally call the solar cells which cover an area which moves together from the deployed to the undeployed position a "set" of solar panels.

It is also important to remember that the type of solar cell can vary. Monocrystalline silicon, polycrystalline silicon, amorphous silicon, cadmium tel-luride, copper indium sulfide can all be used. Many currently available solar cells of these types are made from bulk materials that are cut into wafers between 180 to 240 micrometers thick that are then processed like other semiconductors. But a promising new avenue is called thin film. Other types of organic dyes and polymers deposited on various supporting substrates have also been employed to convert solar energy into electricity. Nano-crystals and quantum dots (which are usually electron-confined nanoparticles) have also been employed to create solar-generated electricity. What defines something as a solar cell is that it can convert sunlight into electricity. Since the key to the present invention involves movement of groups of solar cells together from one position to another one, any type of solar cell can be used as long as they can be placed on some sort of substrate or within some sort of framework which can be moved around from one position to another one. Just as the type of solar cell can vary, the substrate on which they are placed can vary as well.

For purposes of this invention, the word "actuator" is used to describe any mechanism which moves in one line in one direction. However, the fact that some solar panels and the structure are hinged in addition to being connected with an actuator means that the movement of an actuator might change the tilt of a solar panel, set of solar panels or the rear solar array rather than simply moving it in the same type of "up or down" or "forwards and backwards" direction in which the actuator and panel would move if the set of solar panel(s) was not fixedly attached to something else.

In addition to actuators that move in a straight line, the present invention also uses a mechanism which rotates itself and the solar panel to which it is attached. In addition to this "rotating mechanism" and the actuators which move on their own because of electrical, hydraulic, pneumatic or other forms of power, there is also a "telescoping track" associated with the front set of solar panels which are either underneath or in front of the slightly larger set of front solar panels. This is a commonly used mechanism which could be configured in various ways. The key difference between this telescoping track and the actuators is that actuators have power to move themselves while a telescoping track only moves because something it is attached to moves. When the solar panel that the telescoping track is attached to in the front of the vehicle is moved forward by an actuator, the forward movement of the solar panel has the effect of moving one and then another of these formerly stacked up plates forwards to help support the newly deployed movable front solar panels (108). The reason that the prime embodiment uses both an actuator and a telescoping track to help the movable front solar panel reposition itself is that this makes it more stable.

A brief description of the drawings shall now be given.
Fig. 1 is a side view of the present invention when the vehicle is driving and the solar array is in the process of being deployed.
Fig. 2 is a side view of the present invention when the vehicle is driving and the solar array is not deployed.
Fig. 3 is a top view of the present invention with the solar array and the roof taken off.
Fig. 4 is a depiction of how the part of the rear side walls that tilt will allow the side solar panels to tilt and rotate to a position on the same level as the roof solar panels. The rear wall and solar panel 107 are not shown.
Fig. 5 is a top view of the present invention when the solar array is fully deployed.
Fig 6 is a representation of how the on-board computer helps orient the solar array towards maximal electricity generation.
Fig. 7 is a representation of how the on-board computer helps the driver protect the solar panels from extreme weather.
Fig. 8 is a representation of how the on-board computer helps the driver to maintain proper battery charge.
Fig. 9 is a representation of the type of ultra-thin vehicle contemplated which uses an internal combustion engine rather than an electric motor.
Fig. 10 is a representation of how the one foot distance between the occupant and cargo compartment wall and the safety bar can be used as a de facto crumple zone.

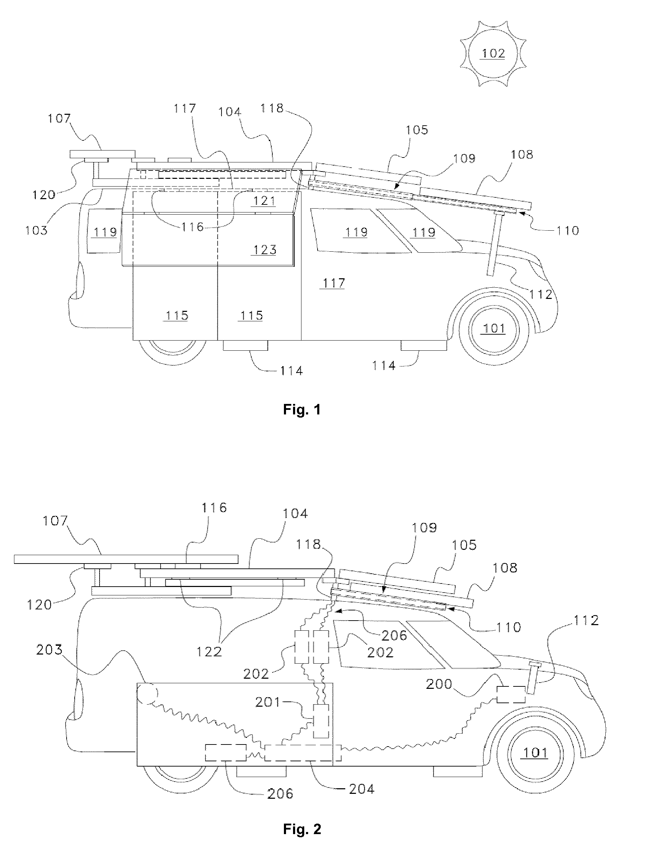

A more detailed description of the drawings now follows. A key movement which one can best visualize by comparing the position of solar panel (108) from its undeployed position in figure 2 to its deployed position in figure 1 is that this solar panel (108) moves forward from being under the front stationary solar panel (105) in figure 2 to being in front of it in figure 1. Because the front edge of the solar panel (108) is attached to the front edge of horizontal actuator (109), the inner tube of this horizontal actuator (109) moving outward causes solar panel (108) to move outwards as well. Because the front of the telescoping track (110) is attached to the front of solar panel (108), the movement of solar panel (108) causes the telescoping track (110) to also move. Two items are suggested (the telescoping track (110) and the horizontal actuator (109)) to maintain the solar panel's stability because otherwise it would be too easy for the solar panel (108) to shake on a windy day. To help support this extended solar panel from below, this embodiment of the present invention suggests that a hood vertical actuator (112) come up from with the hood and help hold the solar panel (108) up when it is deployed forwards of its undeployed position.

Depending on the strength of the actuators and telescoping track, the weight of the solar panel and the exact distance it is being moved beyond other supports, this hood vertical actuator (112) may not be needed.

In a similar vein, it can be seen that the rear solar panel (107) is behind the rear part of the stationary solar array in its deployed position in figure 1. On the other hand, a large part of this same solar panel (107) is not behind the same rear part of the stationary solar array in its undeployed position in figure two. This occurs because of solar panel's (107) attachment to rotating mechanism (120). Because solar panel(s) (107) is attached to this rotating mechanism (120), the rotation of rotating mechanism (120) causes solar panel (107) to rotate as per the arrows in the rear of figure 3.

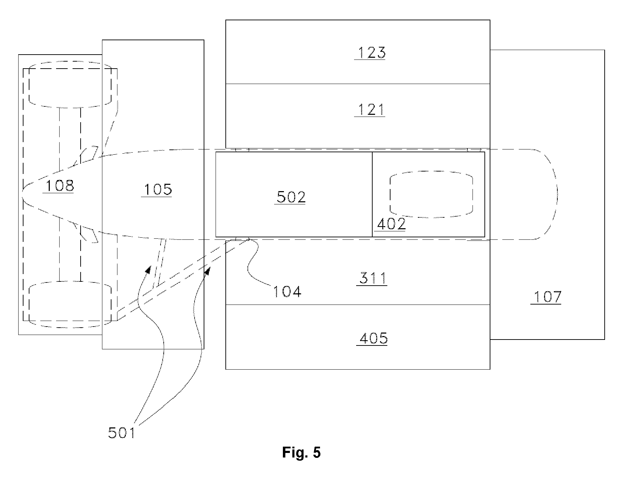

If one looks at the right inner and outer side solar panels (121, 123) in figure 2, on can see how they begin to rotate on their hinges towards a position on the same level as the rear stationary solar panels (402, 502). To keep the total length of the solar array shorter while still maximizing the area of solar cells exposed to direct sunlight, these sets of solar panels (121, 311) will rotate to a position that is perpendicular to the sides of the vehicle and on the same level as the rear stationary solar panels (402, 502). Looking at figure 3, it can be seen that the actuators 308 move the inner side solar panels (121, 404) from their undeployed position perpendicular to the ground. Looking carefully at figure 4, it can be seen that the actuators 403 move the outer side solar panels (123, 405) to their deployed position on the same plane as the other solar panels (402, 404, 123) depicted in figure 4. All the solar panels (404, 121, 311, 405, 105, 108, 402, 502) are fully deployed and none of them cover any other solar panel in figure 5. The only new solar panel introduced in figure 5 is solar panel (502). To understand why there is a difference between solar panels (502) and (402), one has to go back to figure 2. As can be seen in figure 2, about half of the rear part of the stationary solar array (104) is covered by solar panel (107) in its undeployed position. If the rear part of the stationary solar array (104) was not divided into two distinct solar panels (402, 502), then it would produce no electricity at all. This is because the shading of half of this part of the solar array would shut down all its electricity production if it were wired together as one solar panel. By splitting this area up into two separately wired and distinct solar panels (402, 502), the part which is never shaded (502) can produce electricity even when the vehicle is being driven and rear solar panel (107) is in its undeployed position.

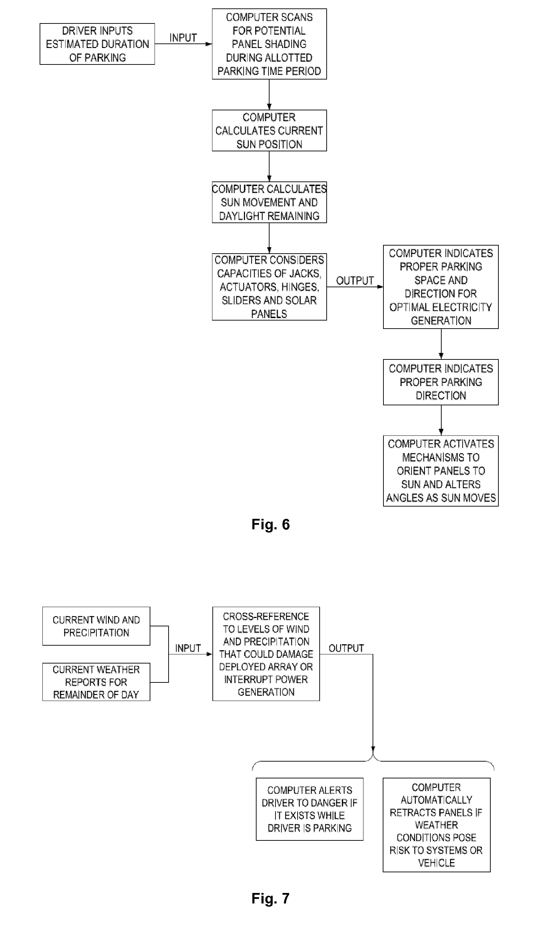

Once all the solar panels are fully deployed and within twenty degrees of being on the same plane as the ground underneath the vehicle, it is preferable to park the vehicle with its front in a generally south-facing direction. Partly because it is difficult to know where true south lies, partly because one usually has only a few parking directional choices and partly because the sun moves across the sky, the vehicle includes strong internal jacks (114). These can be used to raise one or more corners of the vehicle to fine-tune the positioning of the solar array to maximize solar power generation. In parking appropriately, one must also consider large objects and how they might shade the solar array over time. It is also useful to park the vehicle in a direction where the tilted solar array will generally face south. Due to the complexity associated with this process, figure 6 illustrates how an on-board computer can take the lead role in this process.

There is also a danger that heavy winds, very heavy precipitation or some combination of the two might create a high probability that solar panels might be damaged if they are left in the more vulnerable deployed position. Hence, figure 7 illustrates the considerations which an on-board computer would make to retract the array or suggest that the array never be deployed if extreme weather conditions existed.

Another important point is that almost all electric vehicles (including the type contemplated in the present invention) require a partly charged battery array (204) or other energy storage systems to operate at all. Furthermore, depleting the energy storage system below a certain level (generally 60%) begins to cause long-term damage. The same can be true with overcharged battery arrays (204) - albeit to a lesser extent. As figure 8 suggests, therefore, the on-board computer can have access to a GPS type system and a programmed knowledge of the location of all nearby electric recharging stations. With this in mind, the on-board computer is able to suggest to the driver when it might be advisable to make a detour to recharge the batteries. If the driver agrees, then the on-board computer would plot the most efficient course to a battery recharging station and thence to the final destination determined by the driver.

The wavy lines in figure 2 represent the direction of travel of electricity relating to the main motor (206) and the main battery array (204) which supplies it. Firstly, solar generated electricity comes down into the vehicle at a point just below the central point of the stationary solar array. This is the most appropriate entrance point for the solar generated electricity because all the solar panels are approximately equidistant from this support point. The electricity from the solar panels that generate electricity even when the array is undeployed (105, 107, 502) goes to one of the two circuits (202) while the solar generated electricity from the solar panels which only generate electricity in the deployed position (311, 121, 502, 108) goes to the other circuit. From there all the solar electricity goes to the solar charge controller (201). Once the solar charge controller (201) has properly regulated the voltage of the electricity so it won't damage the batteries (204), it will be sent to the battery array (204). When the motor (206) needs it, electricity will then be sent for its use. The on-board computer (200) will also get its electricity from the battery array 204. When the vehicle is producing more electricity than it needs, excess electricity can go through the electrical port (203) to a compatible electrical port in a nearby structure. Alternatively, if the vehicle needs more electricity than the solar panels can generate, electricity can flow from an outside source through electrical port (203) to the batteries (204).

The wavy lines in figure 3 represent how the electricity can run to the auxiliary batteries (315). When either passenger pedals (313), their pedaling will charge a generator (314) which, in turn, charges these auxiliary batteries (315). Alternatively, one can use a regular 12 volt battery charger to charge these auxiliary batteries. But the main way that the auxiliary batteries (315) can be charged is if one of them will be supplied by a solar panel (405) and the other one is supplied by a solar panel (404).

Since the side solar panels (123, 405, 311, 121) are hanging down to within a few inches of the ground when the vehicle is being driven, they would be gradually be made inoperable by road debris if they weren't covered. Furthermore, the vehicle would look too much like a glass truck if there were side solar panels hanging down without being covered. Finally, the lack of a cover for the side solar panels would mean that the vehicle was open to weather and burglars when the side solar panels were deployed. Therefore, a key feature of the present invention is that there should be movable non-solar side walls (115) covering all the side solar panels (123, 405, 311, 121). Although they can open out in other ways, it is preferably that they open out like doors as depicted in figure 3.

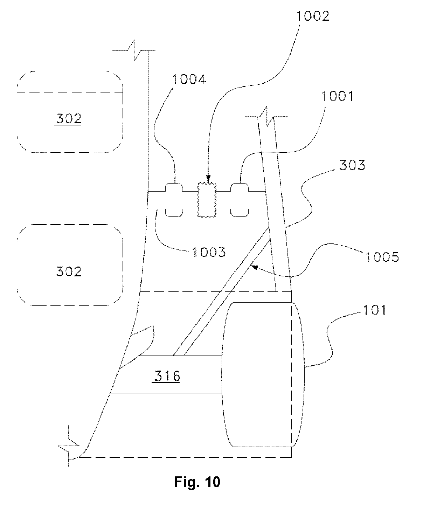

While the focus of this application is on a solar vehicle using our ultra-thin design, comparing figure 9 to figure 3 (which is the same view of two different versions of the present invention where figure 3 is solar and figure 9 is gas driven) suggests that there is at least one advantage of a non-solar version over a solar one. As discussed before, this advantage is that one can have 4 or even 5 seats (302) without creating claustrophobia in the passengers - as opposed to only 3 or 4 seats (302) in a solar version of the vehicle. When looking at figure 9, it can also be seen that the side safety bars (303) run on both sides and run along the full length of the vehicle. While this could also be done in the solar version, full length side safety bars make more sense in a non-solar version because there are more seats with more occupants to be protected spanning the full length of the enclosed vehicle in the non-solar version. Figure 10 reveals that there are at least five possible elements of a crumple zone. They are passive foam-like elements (1001), honey-combed elements (1002), active shock absorber like elements (1003), reboundable rubber like elements (1004) and stiffer metallic-type elements (1005). Stiffer metallic-type elements could be used in the present invention in a way which they are less often used in regular front and rear crumple zones. One idea I suggest is for one stiff rigid piece of metal to be connected to another one in such a way that the first one gradually deforms or even splits the second one as it absorbs energy from an impact. Since this could create a danger that the stiff elements could get into the occupant and cargo compartment, it is preferable that they be aligned in such a way that their natural direction of travel in a collision would be to avoid the occupant and cargo compartment entirely. Therefore, in the claims is suggested the possibility of directing them towards the fender over the part of the oversized axle which lies outsides the perimeter of the occupant and cargo compartment.

In practice, of course, the exact design of the most appropriate crumple zone depends on the weight of the vehicle, its precise configuration and the speeds at which it is designed to travel. Hence, the precise way shown to configure the five elements (1001, 1002, 1003, 1004, 1005) is simply an illustration of how it could be done rather than a suggestion which would apply in more than a hand-ful of cases.

Although the terms and definitions used in the specification are intended to be read into the claims they are not intended to limit the meets and bounds of the claims presented here below in any manner whatsoever.

### Reference numbers

- 101: Tires and wheels
- 102: Sun
- 104: Rear part of stationary solar array
- 105: Front part of stationary solar array
- 107: Rear solar panels
- 108: Movable front solar panel(s)
- 109: Horizontal actuator
- 110: Telescoping track
- 112: Hood vertical actuators
- 114: Jacks
- 115: Movable non-solar side walls
- 119: Windows and windshield
- 120: Rotating mechanism
- 121: Right inner side solar panel(s)
- 123: Right outer side solar panels
- 200: On-board computer
- 201: Solar charge controller
- 202: Circuits
- 203: Electric port
- 204: Batteries
- 205: Internal wiring
- 206: Electric motor
- 302: Seats
- 303: Safety bar
- 304: Front axle
- 305: Impact strut
- 306: Steering wheel
- 308: Actuators to raise and tilt inner side solar panels
- 310: Door
- 313: Pedals
- 314: Generator

- 315: Auxiliary batteries
- 316: Fenders
- 402: Far rear stationary solar panel
- 403: Actuators to deploy outer side solar panels
- 404: Left inner side solar panel(s)
- 405: Left outer side solar panel(s)
- 501: Vehicle
- 502: Mid rear stationary solar panel
- 901: The drive train
- 1001: Passive foam-like elements
- 1002: Honey-combed elements
- 1003: Active shock absorber-like elements
- 1004: Reboundable rubber-like elements
- 1005: Stiffer metallic-type elements

## Claims

1. A solar vehicle with extended driving range and at least three wheels, **characterized in that**
- the solar vehicle has a steering system, a breaking system, a seating system, an instrumentation system, a lighting system, one or more energy storing systems and an electrical prime mover for propulsion,
- the solar vehicle has an occupant and cargo compartment,
- the solar vehicle has a stationary solar array whose total footprint is larger than the total footprint of the occupant and cargo compartment and which covers at least 70% of the top of the occupant and cargo compartment and the solar cells of this stationary solar array are always facing upwards,
- a set of one or more side solar panels are movably attached to a right side of the part of the stationary solar array structure over the cargo storage area and when undeployed, they hang down in a position which is within ten degrees of vertical and when fully deployed, at least half of these side solar panels have solar cells facing upwards and located within five degrees of the same plane as the part of the stationary solar array located over the cargo storage area,
- a set of one or more side solar panels are movably attached to a left side of the part of the stationary solar array over the cargo area and when undeployed, they hang down in a position which is within ten degrees of vertical and when fully deployed, this set of one or more side solar panels have their solar cells facing upwards and located within five degrees of the same plane as the part of the stationary solar array over the cargo storage area,
- when not-deployed, at least part of the side solar panels on both the left and right side of the vehicle are covered by a non-solar wall and this non-solar wall can be tilted, rotated or opened in such a way that it makes it possible for the side solar panels to move freely from their undeployed to their deployed position and vice versa without hitting this non-solar wall.

2. The solar vehicle according to claim 1, **characterized in that** there is a set of one or more movable front solar panels and when undeployed, at least 40% of the total footprint of this set of movable front solar panels overlaps the footprint of the occupant part of the occupant and cargo compartment and when undeployed, at least 85% of the total footprint of the movable front solar panels is under the stationary solar array and when deployed, these movable front solar panels move to a position in front of the stationary solar array.

3. The solar vehicle according to claim 1 or 2, **characterized in that** there is a set of one or more rear solar panels located over and near the very back of the vehicle and when undeployed, the long side of this set of rear solar panels is parallel to the long side of the vehicle and when deployed, this set of rear solar panels is perpendicular to the long side of the vehicle and behind the stationary solar array and behind the side solar panels.

4. The solar vehicle according to claim 2 or 3, **characterized in that** when the vehicle is being driven the movable front solar panels and the part of the stationary solar array above the front occupant area of the vehicle are tilted in such a way that their front perimeters are lower than their rear perimeters and when in the undeployed position, the movable front solar panels and the front part of the stationary solar array above it extend beyond the side of the occupant and cargo area by an area equal to at least fifty percent of the width of the occupant and cargo compartment, i.e., the width of these sets of solar panels is at least 125% of the width of the occupant and cargo compartment and of the three or more wheels which the vehicle has, two are the front wheels and these front wheels are at least as 90% far apart from each other as the width of the movable front solar panels and when the vehicle is being driven, at least 80% of the axle connecting these two front wheels are under the movable front solar panel(s).

5. The solar vehicle according to one of the previous claims, **characterized in that** the side solar panels on each side consist of at least two solar panels, at least one of which is closer to the stationary solar array and at least one of which is further from it and the closer one(s) shall be called the inner side solar panel(s) and the set of solar panels on both sides of the vehicle located further away from the part of the stationary solar array above the cargo storage area shall be called the outer side solar panels and it is possible to deploy the inner side solar panels to the same plane as the part of the stationary solar array above the cargo storage area while still allowing the outer side solar panels to hang down vertically and alternatively, all of the side solar panels can be deployed to the same plane or level as the part of the stationary solar array above the cargo storage area.

6. The solar vehicle according to one of the previous claims, **characterized in that** the electrical voltage required by the prime mover to operate is no more than the collective total voltage of the solar panels that are exposed to sunlight whether in the deployed or undeployed position on a clear day at noon.

7. The solar vehicle according to one of the claims 2 through 6, **characterized in that** the electrical voltage required by the prime mover to operate is no more than the collective total voltage of the rear solar panels, the inner side solar panels, the movable front solar panels and whatever part of the stationary solar array is only exposed to the sun when the vehicle is parked and all the aforementioned sets of solar panels are deployed.

8. The solar vehicle according to one of the previous claims, **characterized in that** two or more jacks or hydraulic lifts are incorporated into the vehicle design, their purpose being to raise at least a part of the solar vehicle for orienting the solar array towards the sun or for vehicle repair and maintenance.

9. The solar vehicle according to one of the previous claims, **characterized in that** the one or more energy storage devices are no more than 5 inches above a floor of the cargo and occupant area.

10. The solar vehicle according to one of the previous claims, **characterized in that** at least one side safety bar part of which is located at least one foot from the side of the vehicle whose purpose is to cushion the impact of a side collision by dissipating the energy of impact.

11. The solar vehicle according to claim 10, **characterized in that** there are fenders over the front two wheels and these fenders are long enough to cover the part of the axle that would otherwise be exposed due to being beyond the outside perimeter of the occupant and cargo compartment and these fenders are also strong enough that they can be connected to any side safety bars and to the part of the stationary solar array which extends beyond the sides of the occupant and cargo compartment.

12. The solar vehicle according to one of the previous claims, **characterized in that** there is a rear bumper located at least six inches from the rear of the vehicle whose purpose it is to help cushion the impact of a rear collision with another vehicle.

13. The solar vehicle according to one of the previous claims, **characterized in that** a passenger can pedal and create electricity to help charge the auxiliary batteries used for lights, actuators and other non-motor parts.

14. The solar vehicle according to one of the previous claims, **characterized in that** a first indicator displays a usable energy stored in the one or more energy storage systems, a second indicator displays a measurement of a solar energy being converted into electricity by the cumulative solar panels, a third indicator displaying the current direction of the sun or due south.

15. The solar vehicle according to one of the previous claims, **characterized in that** a computer can perform both of the following operations;
- determining whether the vehicle can make a trip suggested by the driver without running out of electricity or creating a danger of long-term damage to the batteries,
- if the computer determines that the driver's proposed trip could cause long-term damage to the battery array or if the vehicle will run out of electricity on the way, the computer suggests the shortest detour whereby it is possible to stop at a battery charging station.

16. The solar vehicle according to one of the previous claims, **characterized in that** a computer can monitor weather reports and use some source of direct knowledge of wind and precipitation to
- tell the driver if there is enough danger of damaging the solar array to make it inadvisable to deploy it when parking,
- retract the solar array if the computer determines that the danger of damaging the solar array has increased to the point that it is inadvisable to keep it deployed while the vehicle is parked.

17. The solar vehicle according to one of the previous claims, **characterized in that** a computer can perform both of the following operations;
- suggest a parking spot and the direction to park to maximize solar electricity generation during a planned stay at a particular destination,
- use whatever tools are available to maximize solar electricity output while the vehicle is parked.

18. An enclosed vehicle with a passenger and cargo compartment, **characterized in that** it is no wider than the area needed for a person whose weight is in the 98th percentile of human beings to sit, however, this ultra-thin vehicle is long enough for at least four rows of seats and while there may be either one or two wheels in the rear, there are always two wheels in the front and the distance between these two front wheels is at least 140% as long as the width of the occupant and cargo compartment.

19. The enclosed vehicle according to claim 18, **characterized in that** running parallel to the outside perimeter of the occupant and cargo compartment there is a side safety bar on each side of the vehicle and the side safety bar is at least a foot from the perimeter of the occupant and cargo compartment and the buffer zone created by this one foot or greater distance is a de facto crumple zone through the use of one or more of the following elements to connect the side safety bar to the outside perimeter of the occupant and cargo compartment and in the interest of improving the crashworthy nature of the vehicle, these following same elements could also be used to connect one or more of the side safety bars to a fender system over the long front axle and front wheels;
- materials using a honeycombed design,
- reboundable rubber-like element,
- an active system like shock absorbers,
- passive foamlike elements,
- a stiffer metallic-like element configured to absorb part of the impact of a collision without having a high likelihood of coming into the occupant and cargo compartment to injure the occupants.
